# EUROPEAN PATENT APPLICATION

(11) **EP 1 411 665 A1**
(43) Date of publication of application: **21.04.2004**
(21) Application number: 02292589.5
(22) Date of filing: 18.10.2002
(51) Int. Cl.: H04J 14/02

(54) **Method and apparatus for shared protection in an optical transport network ring based on the ODU management**

(71) Applicant: ALCATEL, 75008 Paris (FR)
(72) Inventor: Miriello, Virgilio, 20059 Vimercate (Milano) (IT); Mascolo, Vittorio, 26855 Lodivecchio (Lodi) (IT)
(74) Representative: Lamoureux, Bernard

(57) **Abstract**

The present invention provides for a method and apparatus for shared protection in an Optical Transport Network ring based on the ODU management, based on the access of the APS/PCC bytes of the ODU Overhead at nodes, preferably by a dedicated sub-layer (like the Tandem Connection Monitoring TCM), and on the use of an end-to-end signaling APS protocol in an ODU-Shared Protection Ring topology.

## Description

The present invention relates to a method and apparatus for shared protection in an Optical Transport Network ring based on the ODU management.

In present telecommunications networks it is extremely important to recover network failures without interfering with service functionality Such a need is even more felt in large network to increase the traffic availability and the MTTR (Mean Time To Repair), consequently to reduce the OPEX (Operational Expenditure) and the TCO (Total Cost of Ownership), with big advantage for operators' revenue.

Therefore, telecommunication networks, in particular fiber optics networks, are provided with self-healing protection mechanisms against failures and degradations of their elements and/or fiber spans

In SDH/SONET networks, for example, a shared protection mechanism, the so-called MS-SPRING (Multiplex Section-Shared Protected Ring) is implemented for automatic traffic restorationin ring topologies.

MS-SPRING networks perform automatic traffic restoration through a synchronized rerouting mechanism performed at each ring node. This operation is controlled by a byte oriented protocol defined by international recommendations issued by ANSI, ITU-T and ETSI Standards, such as ITU-T G.841 and G.842.

The SDH/SONET Standards define two MS-SPRING network types, one for two-fiber rings, i.e. each ring node is connected to another node by a span consisting of only two fiber optics carrying signals propagating in opposite directions between them, the other for four-fiber rings, capable of carrying higher traffic.

Two adjacent network elements in the ring are joined by a fiber optic span consisting of two connections carrying the traffic in opposite directions.

In the two-fiber MS-SPRING network the bandwidth is split in two halves of equal capacity, called working capacity (working channel) and protection capacity (protection channel). Working channel is used for high priority traffic, whereas protection channel is used for low priority traffic, namely a traffic that may go lost if a failure occurs. The protection in such a network is implemented according to a so-called "Bridge & Switch" mechanism, which comprises the step of rerouting traffic by properly modifying the inner connections of the network elements, i.e. switching over from working channel to protection channel, using dual-ended method and requiring synchronization between bridge and switch activation to avoid misconnection.

The Bridge operation will substantially cause a node to transmit the working traffic on the protecting channel, whereas the Switch operation allows the receiver to select the traffic arriving on the protection channel instead of the traffic passing on the working channel.

The four-fiber MS-SPRING network, unlike the two-fiber ring, supports working capacity and protection capacity on different couple of fibers instead of supporting them both on one couple alone, and is able to overcome multiple span failures without loss of any traffic, in particular the failures affecting only the high priority traffic transported on the working channel. On the contrary the two-fiber MS-SPRING are only able to overcome one failure at a time without traffic loss, since one single failure will affect both the working channel and protection channel of one span being they are carried by the same couple of fiber.

According to such a known protection technique, called APS (Automatic Protection Switch), each Network Element is capable of detecting line failure, transmitting and receiving information related to the other network elements and performing Bridge and Switch operations.

It is known that each Network Element is provisioned with data called "traffic Maps". Typically for each ring direction (clockwise and counterclockwise) there are:
- high priority traffic maps (HP);
- low priority traffic maps (LP).

Generally this information is used in case of ring fault to restore the high priority traffic, affecting partially the low priority one. In fact, depending on the HP traffic distribution and on the fault location, some LP traffic can be saved because it is not used to restore the HP one.

More specifically for very long spans cases the well-known transoceanic MS-SPRING is used to avoidvery long paths for the transportation of the HP traffic on the protecting channels and to provide efficient LP traffic transportation when the protection mechanism has been activated. From the network perspective this approach is more suitable than the known terrestrial one.

In the transoceanic MS-SPRING the protocol information is carried over the multiplex section. By consequence when a fault occurs each node makes an analysis of the APS protocol to get the fault location. With this information and the provisioned traffic maps, a node-by- node analysis allows to remove the extra-traffic (LP) and use their respective connection to restore the HP one.

The ITU-T G.872 recommendation defines the architecture of the OTN (Optical Transport Network) made of three main layers: OTS (Optical Transmission Section), OMS (Optical Multiplex Section) and OCH (Optical Channel).

The ITU-T G.709 recommendation defines the OCH layer structure and the frame format at the ONNI (Optical Network Node Interface) level. The G.709 defined besides information to manage all the above-mentioned layers. For each layer the transported information is made of payload and Overheads. Particularly the OCH entity, made of two main units ODU (Optical Data Unit) and OTU (Optical Transport Unit), transports payload and associated Overhead information. In particular the purpose of the ODU-Overhead is to carry information managing and monitoring the end-to-end connection crossing optical network.

The G.709 also defines several Tandem Connection (TC) levels within the same ODU frame. Each level of TC has its own Overheads dedicated for the TC Monitoring (TCM) function.

As in the SDH network there is the need to develop and to apply protection mechanisms also in the Optical Transmission Network (OTN), achieving the same benefits in terms of TCO reduction.

Trying to apply in the OTN a protection mechanism similar to the SDH one (MS-SPRING) the objective of the present invention is to avoid both squelching table and traffic map provisioning. This to avoid, especially in case of a considerable number of nodes and connections, the problem of requiring a considerable amount of memory resources and calculation efforts in each Network Element.

Considering the known MS-SPRING solution not efficient, the main object of the present invention is to provide a shared protection mechanism that in the Optical Transport Network is based on the ODU management to avoid both squelching table, necessary in terrestrial applications, and traffic map provisioning mandatory in the transoceanic case. The method is basic applicable at ring configured network, but can be extended also to the meshed configurations.

The objective to provide a ODU-Shared Protection Ring architecture, capable to avoid the squelching tables and the traffic maps information, can be achieved by using either one (out of six) available Tandem Connection Monitoring sub-layer or a dedicated ODU sub-layer for accessing the APS/PCC end-to-end signaling in the intermediate nodes. The signaling protocol needs also to be terminated and processed in the termination nodes defining the ring path connection.

This solution allows to save the equipment data base size and to simplify the Network Management system provisioning activity.

These and further objects are achieved by means of a method and relating apparatus, network and network node, as described in the attached claims, which are considered an integral part of the present description.

The invention will become clear from the following detailed description, given by way of a mere exemplifying and non-limiting example, to be read with reference to the attached drawing figures, wherein:
- Fig. 1 shows the known structure of the ODU overhead;
- Fig. 2 shows an example of ring network applying the method according to the invention;
- Fig. 3 shows the network of Fig. 2 in a failure condition.

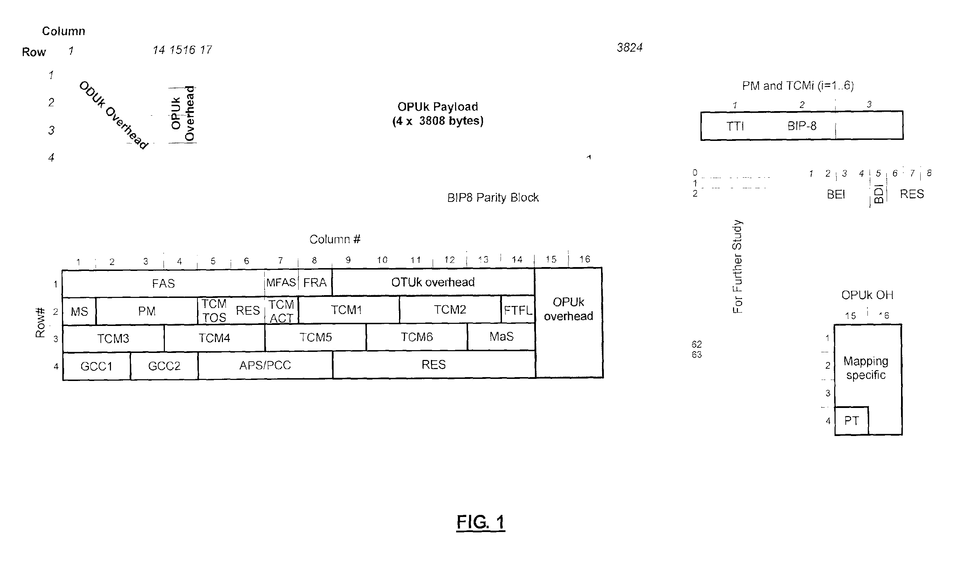

The known structure of the ODU overhead is shown in Fig. 1. The fields of the overhead are described in the G.709.

The present invention starts from the consideration that in the OTN rings for each ODU working there is the relative ODU protection resource. By means of the data overhead protection resources (APS/PCC bytes, Fig. 1) it is possible to manage the APS protocol accessible at each node through the use of a suitable sub-layer, which could be any existing tandem connection monitoring layer (TCM) or another sub-layer dedicated for ODU network protection.

By enabling or disabling access to the APS channel at the nodes, it is possible to allow or to deny each node to get the APS information.

The key points of the procedure according to the invention are:
1. The use of end-to-end APS signaling;
2. The access to the APS information at each node, preferably by means of a dedicated sub-layer, or by means of the TCM capability.

When a failure or a degrade occurs in a working ODU in the ring, a Signal Fail SF or a Signal Degrade SD criterion activates the APS engine (known per se) by running the APS protocol on the assigned protecting ODU in the opposite side of the ring. In this condition the dedicated sub-layer along the protecting ODU is crossed by the APS signaling and is informed that the working ODU is requiring the protection action. By consequence the APS engine implemented in the nodes can squelch the managed protecting LP traffic and allocate the relative resource to recover the HP traffic. This action is done without consulting any traffic map info if the suitable sub-layer is enabled in all the nodes terminating the LP traffic.

By applying this end-switch mechanism the ODU-SPRing behaviour, can be summarized as follow:
1. For each ODU-path connection there is an ODU-path resource protecting it along the opposite side of the ring. This protection resource could serve different ODU-paths and for each working ODU-path there will be an associated APS mechanism.
2. An end-to-end signaling is used, namely the nodes that terminate the ODU-path level are allowed to manage the signaling protocol (not the node adjacent to the fault as in the traditional SPRing topology) and the consequent bridge-and-switch operation.
3. Preferably a dedicated sub-layer is enabled between the nodes that terminate the ODU-path and between any couple of the other nodes that belong to the alternative path of the ring.

Therefore the end-to-end signaling provided by the present invention replaces the signaling by the nodes adjacent to the failure and the traffic map provisioning of the known system. It is only needed at each node a simple provisioning table with APS enable information: for each ODU-path in the node the table will give the simple information on whether the APS mechanism concerning that ODU-path must be enabled or not.

Because of the nature of the end-to-end mechanism (source routing along the opposite ring side) a simple rule can be applied: the TCM, or another dedicated sub-layer, must be enabled starting from the end-to-end nodes and over all the other nodes that belong to the protection ring portion.

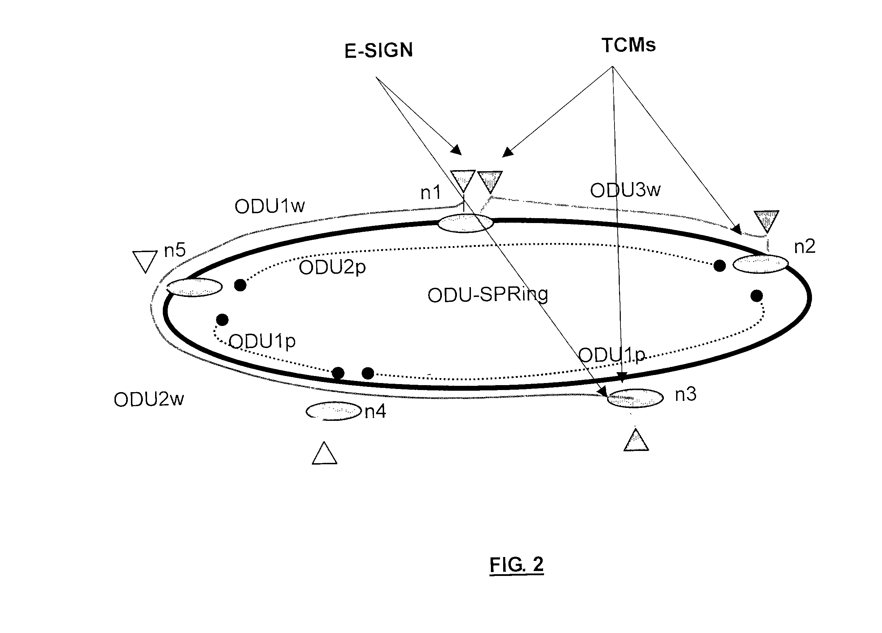

The above procedure will be better explained with reference to the following non-limiting example, also with reference to Fig. 2.
- The working path ODU1w connects the nodes n1 and n3 through the nodes n4 and n5. In the non-limiting example of Fig. 2 there are also the working paths ODU2w, connecting nodes n4 and n5, and ODU3w connecting nodes n1 and n2.
- The protection resource for the working path ODU1w will be an ODU-path connecting the nodes n1 and n3 through n2 using the ODU1p protection path resources available on this ring-side. In the non-limiting example of Fig. 2, the ODU protection paths transporting extra traffic are ODU2p connecting nodes n5, n1 and n2, ODU1p connecting nodes n2, n3, and n4, and nodes n4 and n5.
- To protect the working path ODU1w, the APS access in the ODU Overhead, through a suitable sub-layer, for example the TCM, will be enabled on nodes n1, n3 and n2 only. The end-to-end signaling E-SIGN is applied by the terminating nodes n1 and n3.
- The above step will be applied for each working path ODUw.

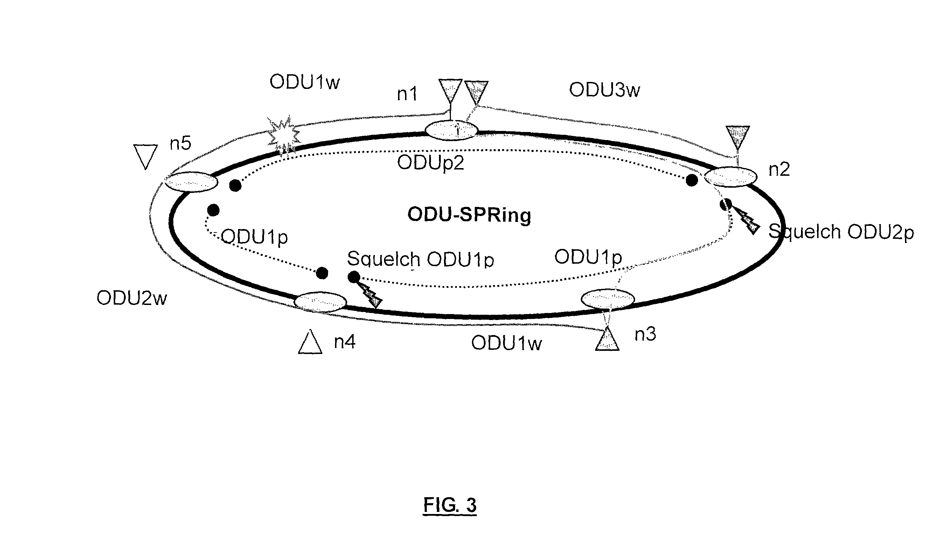

With reference to Fig. 3, let's analyze this scenario when a fiber failure affects the ring between nodes n1 and n5.

The ODU-SPRing protection is according to the following steps:
1. The terminating nodes n3 and n1 detect the failure on the ODU1w connection level.
2. The failure event is used to trigger the dedicated APS engine.
3. The APS engine uses the APS/PCC bytes of the respective ODU1p protection resource overhead to start the end-to-end signaling protocol.
4. For this ODU1w the dedicated sub-layer (for example TCM) is enabled only on nodes n1, n2, and n3.
5. The intermediate node n2, by observing that the protocol on the ODU1p resource is moving from the "IDLE" status" towards something different, can deduce that the ODU1w working resources is requiring a protection action. As a consequence the node n2 can perform all the actions required to get the availability of the ODU1p protection resources (squelchs its ODU1p local traffic and performs pass-through connection for it). Besides the nodes n1 and n3 will squelch the ODU1p they terminate. The result is that the LP traffic on the protection path ODU2p connecting nodes n5, n1 and n2, will be lost due to the failure whilst the LP traffic on the protection pathODU1p connecting nodes n2, n3, and n4 will be squelched: instead the LP traffic on the protection path ODU1p connecting nodes n4 and n5 will be preserved, as it is not affected by the bridge-and-switch operation.
6. Then a Bridge-and-Swith operation will be performed by the switching nodes n1 and n3; as a result the path ODU1w will be restored through the other side ring preserving the ODU1p protection resource between the nodes n4 and n5.

Therefore, in order to manage the restoration actions, no traffic map analysis is required, but sub-layer enabling and APS table provisioning only.

Further implementation details will not be described, as the man skilled in the art is able to carry out the invention starting from the teaching of the above description.

In particular the method of the present invention can be suitably embodied in a relating improvement of an optical transport ring network and network node, by the skilled man using the available background technology and what has been described above, without needing further explanation details.

The present invention can be advantageously implemented through a program for computer, for example as a part of a Network Management System, comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

## Claims

1. Method for shared protection in an Optical Transport Network ring, in which Optical Transport Network there is an ODU layer, having an ODU overhead frame part in which an APS signaling information is present, in the ring ODU working paths and associated ODU protection paths along the opposite side of the ring being present where there is a flow of LP (low Priority) and HP (High Priority) traffic, **characterized in that** it comprises the following steps:
- for each working ODU-path there is an associated APS signaling mechanism;
- an end-to-end APS signaling is used, by the access of the APS signaling information at each node, namely the nodes that terminate the ODU path are allowed to manage the APS signaling protocol and the consequent bridge-and-switch operation for protection;
- when a failure or a degrade occurs in a ODU working path, the APS signaling protocol is activated on the assigned ODU protection path in the opposite side of the ring;
- the managed LP traffic on the ODU protection path is squelched, and the relative resource is allocated to recover the HP traffic.

2. Method according to claim 1, **characterized in that** an ODU dedicated sub-layer is enabled on the nodes that terminate the ODU-path and on all the nodes belonging to the said ODU protection path in the opposite side of the ring, the said dedicated sub-layer is used to access the said APS signaling information.

3. Method according to claim 2, **characterized in that** said ODU dedicated sub-layer is Tandem Connection Monitoring (TCM).

4. Method according to claim 1, **characterized in that** said access of the APS signaling information at each node is performed by provisioning each node with a table with the APS enable information: for each ODU-path in the node, the table will give the information on whether the APS mechanism concerning that ODU-path must be enabled ot not.

5. Method according to claim 1, **characterized in that** when a failure or a degrade occurs in an ODU working path, said end-to-end APS signaling is such that a source routing along the opposite ring side is performed, with the following rule:
- for HP traffic that involves two adjacent nodes of the ring, the APS signaling information is enabled on all the remaining nodes;
- for all the other cases, the APS signaling information is enabled starting from the end-to-end nodes and over all the other nodes of the ring that belong to the protection ring portion.

6. Optical Transport Network ring, **characterized in that** it comprises means to perform the method of any of claims 1 to 5.

7. Optical Transport Network node, **characterized in that** it comprises means to perform the method of any of claims 1 to 5.

8. Computer program comprising computer program code means adapted to perform all the steps of claims 1 to 5 when said program is run on a computer.

9. A computer readable medium having a program recorded thereon, said computer readable medium comprising computer program code means adapted to perform all the steps of claims 1 to 5 when said program is run on a computer.
